# EUROPEAN PATENT APPLICATION

(11) **EP 4 583 518 A1**
(43) Date of publication of application: **09.07.2025**
(21) Application number: 23859415.4
(22) Date of filing: 30.08.2023
(51) Int. Cl.: H04N 21/472

(54) **LIVE-STREAMING ROOM VISITING METHOD AND APPARATUS, AND DEVICE AND MEDIUM**

(30) Priority: 30.08.2022 CN 202211049274
(71) Applicant: Beijing Zitiao Network Technology Co., Ltd., Beijing 100190 (CN)
(72) Inventor: WANG, Xinyue, Beijing 100028 (CN); ZHANG, Tiantian, Beijing 100028 (CN)
(74) Representative: Dentons UK and Middle East LLP
(86) International application number: PCT/CN2023/115890
(87) International publication number: WO 2024/046386

(57) **Abstract**

Disclosed are a live-streaming room visiting method and apparatus, and a device and a medium. The method comprises: when a user browses a video stream by means of a preview interface of a client, the preview interface displaying, in a first preview mode, a live-streaming picture of a first live-streaming room; when the user triggers a first gesture in the preview interface, acquiring the first gesture, and determining whether the first gesture meets a preset condition; and if the first gesture meets the preset condition, then directly entering the first live-streaming room, which is in a clear-screen mode. The first gesture is a multi-point touch-control gesture. That is, when the first gesture, which is triggered in the preview interface by means of the user, meets the preset condition, the user can directly enters the live-streaming room, which is in the clear-screen mode, to watch the live-streaming picture, such that the interaction path is shortened, and the compatibility is improved, which better conforms to the expectation of the user, thereby facilitating the user in rapidly focusing on live-streaming content, and improving the usage experience of the user.

## Description

This application claims the priority to Chinese patent application No. 202211049274.0 filed with the SIPO on August 30, 2022 and entitled "LIVE-STREAMING ROOM ACCESSING METHOD AND APPARATUS, AND DEVICE AND MEDIUM", which is incorporated herein in its entirety by reference.

### TECHNICAL FIELD

The present disclosure relates to the technical field of computers, in particular to a live-streaming room accessing method and apparatus, a device and a medium.

### BACKGROUND

With the continuous development of live-streaming technology, more and more users socialize through live-streaming. Users can choose the interested live-streaming rooms through live-streaming clients with live-streaming viewing functions, and access the live-streaming rooms to watch the live-streaming screens. At present, users usually choose to browse the live-streaming video in a preview stream which, however, cannot satisfy user's requirements on interaction. For example, users cannot follow or interact with the streamer; furthermore, due to the large amount of information displayed in the live-streaming room, users can't focus on the screen contents of the streamer per se, which can't satisfy the user's viewing requirements.

### SUMMARY

Embodiments of the present disclosure provide a live-streaming room accessing method and apparatus, a device and a medium.

In order to achieve the above purpose, the present disclosure provides the following technical solution.

In a first aspect of the present disclosure, there is provided a live-streaming room accessing method, which includes:
displaying a preview interface, wherein the preview interface displays a live-streaming screen of a first live-streaming room in a first preview mode;
in response to a first gesture triggered on the preview interface, acquiring the first gesture, wherein the first gesture is a multi-touch gesture;
in response to the first gesture satisfying a preset condition, entering the first live-streaming room, and displaying the live-streaming screen of the first live-streaming room in a clear-screen mode.

In a second aspect of the present disclosure, there is provided a live-streaming room accessing apparatus, which includes:
a first display unit, configured to display a preview interface, wherein the preview interface displays a live-streaming screen of a first live-streaming room in a first preview mode;
an acquisition unit, configured to, in response to a first gesture triggered on the preview interface, acquire the first gesture, wherein the first gesture is a multi-touch gesture; and
a second display unit, configured to, in response to the first gesture satisfying a preset condition, enter the first live-streaming room, and display the live-streaming screen of the first live-streaming room in a clear-screen mode.

In a third aspect of the present disclosure, there is provided an electronic device, which includes a processor and a memory;
the memory is configured to store an instruction or a computer program;
the processor is configured to execute the instruction or the computer program in the memory, so as to cause the electronic device to implement the method described in the first aspect.

In a fourth aspect of the present disclosure, there is provided a computer-readable storage medium having instructions stored therein, the instructions, when executed on a device, are configured to cause the device to implement the method described in the first aspect.

In a fifth aspect of the present disclosure, there is provided a computer program product including a computer program/instruction which, when executed by a processor, is configured to implement the method described in the first aspect.

### BRIEF DESCRIPTION OF DRAWINGS

In order to more clearly explain the technical solution in the embodiments of the present disclosure or related technology, the drawings necessary for the description of the embodiments or related technology will be briefly introduced below. Obviously, the drawings in the following description are only some embodiments recorded in the present disclosure. For those ordinary skilled in the field, other drawings can be obtained according to these drawings without creative work.
Fig. 1 is a flow chart of a live-streaming room accessing method provided by an embodiment of the present disclosure;
Fig. 2a is a schematic diagram of a preview interface provided by an embodiment of the present disclosure;
Fig. 2b is a schematic diagram of a live-streaming room in a clear-screen mode provided by an embodiment of the present disclosure;
Fig. 2c is a schematic diagram of a live-streaming room in a standard mode provided by an embodiment of the present disclosure;
Fig. 3a is a schematic diagram of a first gesture provided by an embodiment of the present disclosure;
Fig. 3b is a schematic diagram of a first gesture change provided by an embodiment of the present disclosure;
Fig. 4 is a schematic structural diagram of a live-streaming room accessing apparatus provided by an embodiment of the present disclosure; and
Fig. 5 is a schematic structural diagram of an electronic device provided by an embodiment of the present disclosure.

### DETAILED DESCRIPTION

In order to enable those skilled in the art to better understand the technical solution of the present disclosure, the technical solution in the embodiments of the present disclosure will be described below, in a clear and complete way, with reference to the accompanying drawings. Obviously, the described embodiments are only part of the embodiments of the present disclosure, but not all the embodiments. Based on the embodiments in the present disclosure, all other embodiments obtained by ordinary skilled in the art without creative work fall within the scope of protection of the present disclosure.

In related solutions, users can browse the live-streaming video through the preview stream at the client, or participate in the live-streaming interaction by entering the live-streaming room. However, when browsing the live streaming through the preview stream, the users' requirements on interaction cannot be satisfied, for example, they cannot follow the streamer or interact with the streamer, and cannot focus on the screen contents of the streamer per se due to the large amount of information displayed in the live-streaming room, which can't satisfy the user's viewing requirements.

In view of the above, the present disclosure provides a live-streaming room accessing method. When a user browses the live-streaming screen of a first live-streaming room on the preview interface, in response to a first gesture triggered by the user on the preview interface, the first gesture is acquired, and it is judged whether the first gesture satisfies a preset condition. If the first gesture satisfies the preset condition, the user can directly enter the first live-streaming room in a clear-screen mode, which is convenient for the user to highly efficiently switch from the preview stream to the live-streaming screen of the first live-streaming room in the clear-screen mode. In this way, it shortens the interaction path, improves the compatibility and is more in line with users' expectations, which is beneficial for the users to quickly focus on live-streaming contents and improve users' experiences.

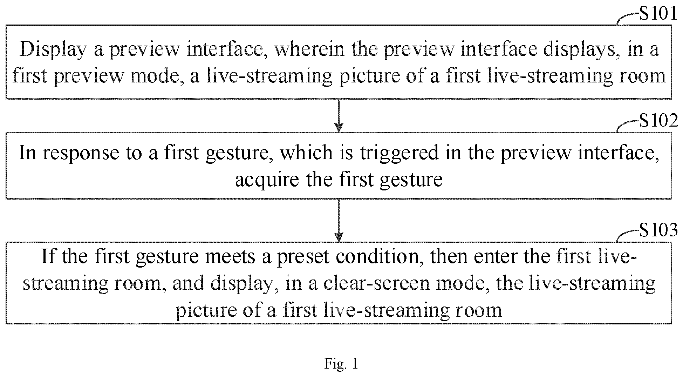

Referring to Fig. 1, which is a flow chart of a live-streaming room accessing method provided by an embodiment of the present disclosure. As shown in Fig. 1, the method can be executed by a client for accessing live-streaming rooms, which can be installed on an electronic device. The electronic device may include smart appliances, such as smart TV, smart refrigerator and other devices with communication function; the electronic device may also be a screen projection equipment for conference, a virtual machine or a device implemented by a simulator. As shown in Fig. 1, the method may include the following steps:

S101, displaying a preview interface, wherein the preview interface displays a live-streaming screen of a first live-streaming room in a first preview mode.

In this embodiment, when the user browses a video through a client, he/she can enter a preview interface firstly, the preview interface displays a live-streaming screen of a first live-streaming room in a first preview mode. The user can switch the screen displayed on the preview interface by triggering an upward sliding/downward sliding operation on the preview interface.

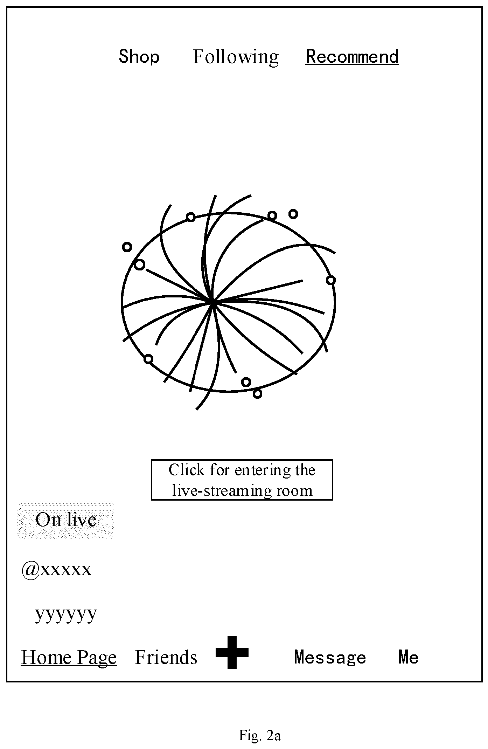

For example, the preview interface in the first preview mode shown in Fig. 2a shows a screen of a live-streaming room, and at the same time, the corresponding account identifier @xxxxx of the live-streaming room, the topic identifier "yyyyyy" of the current live streaming and the entrance identifier of the live-streaming room are displayed. The preview interface also includes a top navigation bar and a bottom navigation bar, and each navigation bar includes various function labels, so that the corresponding function pages can be accessed through these function labels.

S102, in response to a first gesture triggered on the preview interface, acquiring the first gesture.

S103, in response to the first gesture satisfying a preset condition, entering the first live-streaming room and displaying the live-streaming screen of the first live-streaming room in a clear-screen mode.

When the user triggers the first gesture on the preview interface, the first gesture is acquired. The first gesture refers to a multi-touch gesture, for example, the first gesture can be a two-point gesture such as a pinching or rotating gesture. Specifically, the first gesture can be a two-finger opening gesture or a two-finger pinching gesture.

When it is detected that the user triggers the first gesture on the preview interface, it is judged whether the first gesture satisfies the preset condition. If the first gesture satisfies the preset condition, the user enters the first live-streaming room, and the live-streaming screen of the first live-streaming room is displayed in a clear-screen mode, so that the user can watch the live-streaming screen of the first live-streaming room in the clear-screen mode. The clear-screen mode refers to a mode in which unnecessary words and icons on the screen are removed away so that users can focus on the live-streaming screen without being disturbed by these unnecessary words and icons, and the users' experience can be improved.

The preset condition corresponds to the first gesture. For example, when the first gesture is a two-finger opening gesture, it refers to enlarging the live-streaming screen, and the preset condition may include: a magnification factor of the live-streaming screen is greater than or equal to a preset magnification factor threshold and the fingers have left the preview interface; i.e., when the magnification factor corresponding to the first gesture is equal to or greater than the preset magnification factor threshold, the live-streaming room will be entered in a clear-screen mode. For another example, when the first gesture is a two-finger pinching gesture, it refers to reducing the live-streaming screen, and the preset condition may include: a reduction factor of the live-streaming screen is smaller than or equal to a corresponding preset reduction factor threshold; i.e., when the reduction factor corresponding to the first gesture is smaller than or equal to the preset reduction factor threshold, the live-streaming room is entered in a clear-screen mode.

In an embodiment, in response to triggering a zoom-in gesture on the preview interface, the first live-streaming room is entered and the live-streaming screen of the first live-streaming room is displayed in a clear-screen mode, so that the clear-screen display mode of the entered live-streaming room corresponds to the zoom-in gesture, which is in line with the user's expectation and is convenient for the user to quickly obtain the screen content of interest.

In some embodiments, displaying the live-streaming screen of the first live-streaming room in the clear-screen mode may include:

In response to entering the first live-streaming room, the live-streaming screen of the first live-streaming room is displayed in a first clear-screen mode; or, in response to entering the first live-streaming room, the live-streaming screen of the first live-streaming room is displayed in a second clear-screen mode. The number of screen elements on the screen of the first live-streaming room corresponding to the first clear-screen mode is smaller than the number of screen elements on the screen of the first live-streaming room corresponding to the second clear-screen mode. The screen elements refer to the elements displayed on the live-streaming screen, which may include, for example, the streamer's identifier, comment information, function controls, etc. For example, the first clear-screen mode cancels the display of all extra information on the live-streaming screen, while the second clear-screen mode only cancels the display of comment information on the live-streaming screen and can also display the avatar, nickname, like control, gifting control and so on of the streamer corresponding to the first live-streaming room. Specifically, the identifier of the streamer is displayed on the screen of the first live-streaming room displayed in the first clear-screen mode and the comment information is cancelled, while the identifier of the streamer and the type identifier of the live-streaming room are displayed on the live-streaming screen of the first live-streaming room displayed in the second clear-screen mode.

It should be noted that in addition to the first clear-screen mode and the second clear-screen mode, the live-streaming room can also be displayed in a standard mode. It can be switched among the first clear-screen mode, the second clear-screen mode and the standard mode. The standard mode refers to a mode set in advance for the live-streaming screen of the live-streaming room, so that at least the streamer's identifier, the comment information, the function controls and other contents are displayed on the screen of the live-streaming room displayed in the standard mode.

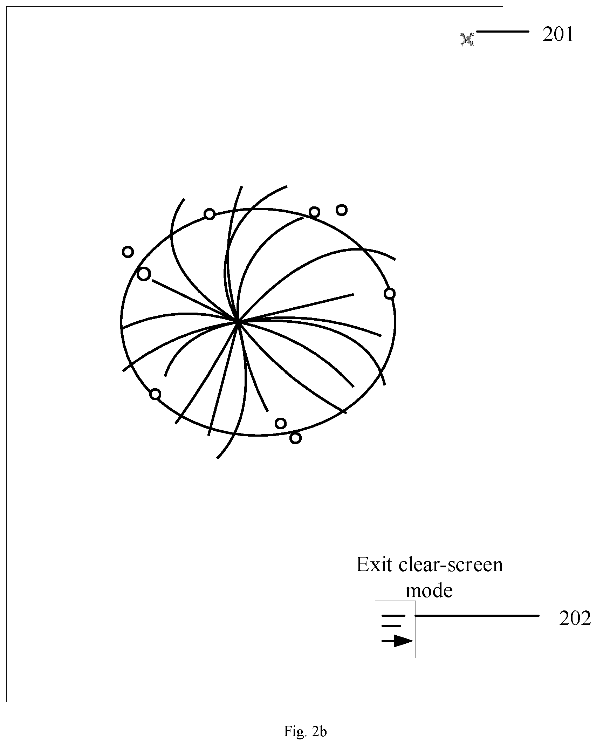

The number of interface elements displayed on the screen of the live-streaming room displayed in the first clear-screen mode is smaller than the number of interface elements displayed on the screen of the live-streaming room displayed in the standard mode, so that the screen of the live-streaming room displayed in the first clear-screen mode is more concise than that displayed in the standard mode. For example, only live-streaming content similar to video data can be displayed on the screen of the live-streaming room displayed in the first clear-screen mode. For another example, the screen of the live-streaming room displayed in the first clear-screen mode can be obtained by canceling the display of all interface elements except the streamer's identifier displayed on the screen of the live-streaming room displayed in the standard mode, so that only the live-streaming content and the streamer's identifier can be displayed on the screen of the live-streaming room displayed in the first clear-screen mode. For yet another example, the screen of the live-streaming room displayed in the first clear-screen mode (for example, the screen of the live-streaming room displayed in the first clear-screen mode shown in Fig. 2b) may further include a closing control and a clear-screen exiting control.

The number of interface elements displayed on the screen of the live-streaming room displayed in the second clear-screen mode is smaller than that displayed on the screen of the live-streaming room displayed in the standard mode, and the number of interface elements displayed on the screen of the live-streaming room displayed in the second clear-screen mode is greater than that displayed on the screen of the live-streaming room displayed in the first clear-screen mode, so that the screen of the live-streaming room displayed in the second clear-screen mode is more concise than the screen of the live-streaming room displayed in the standard mode but is richer than the screen of the live-streaming room displayed in the first clear-screen mode. For example, only the live-streaming content, the streamer's identifier and the type identifier of the live-streaming room can be displayed on the screen of the live-streaming room displayed in the second clear-screen mode. For another example, the screen of the live-streaming room displayed in the second clear-screen mode can be obtained by canceling the display of the comment information displayed on the screen of the live-streaming room displayed in the standard mode, so that other interface elements except the comment information can be displayed on the screen of the live-streaming room displayed in the second clear-screen mode.

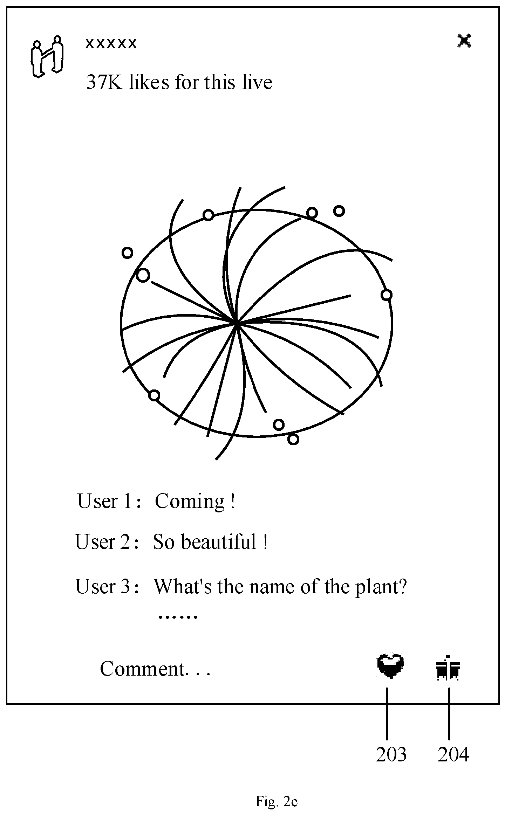

For example, as shown in Fig. 2b, in a first clear-screen mode, the live-streaming screen, the closing control 201 and the clear-screen exiting control 202 are displayed on the screen of the live-streaming room. Among them, the closing control 201 is used to exit the live-streaming room and return to the preview interface shown in Fig. 2a; the clear-screen exiting control 202 is used to exit the clear-screen mode and display the live-streaming screen of the live-streaming room in a normal mode. For example, Fig. 2c shows a schematic diagram of a live-streaming screen of the live-streaming room displayed in a standard mode. In this mode, it includes not only the live-streaming screen, but also the information related to the live-streaming room, comment information and functional controls, such as the like control 203 and the gifting control 204.

In an embodiment, the information allowed to be displayed in the first and second clear-screen modes can be preset according to actual application scenarios. For example, when the first live-streaming room is for live-streaming marketing, a shopping cart control can also be displayed on the live-streaming screen in the first or second clear-screen mode, so that users can enter the product display page by triggering the shopping cart control when watching the live-streaming screen, and then purchase the required products. When the first live-streaming room is a live game, functional controls related to the game can also be displayed on the live-streaming screen in the first or second clear-screen mode.

In some embodiments, when entering the first live-streaming room, in order to remind the user that he/she has entered a live-streaming room, a vibration prompt can also be given to improve the user's experience. Specifically, in response to entering the first live-streaming room, a vibration signal is sent to an equipment where the live-streaming client is located, so that the equipment can give a vibration prompt according to the vibration signal.

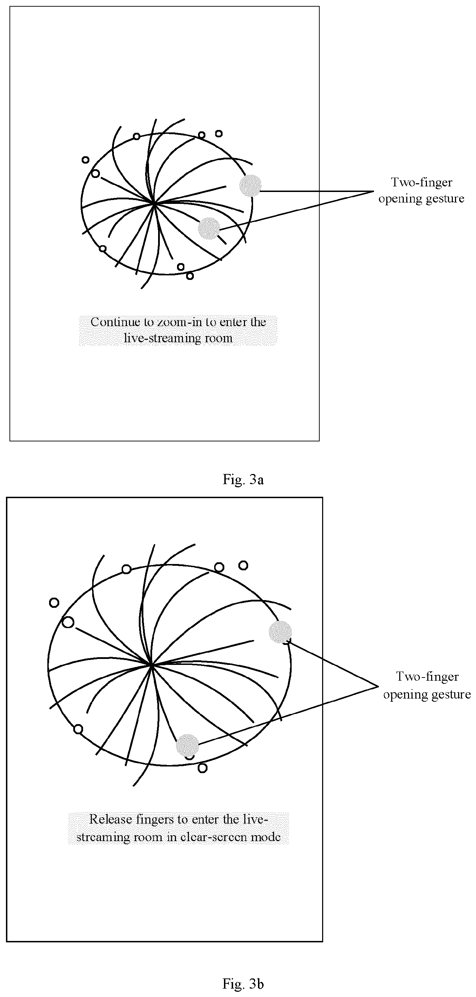

In some embodiments, if the first gesture does not satisfy the preset condition, first prompt information is displayed, which is used to indicate that the user can enter the first live-streaming room by continuing to operate the first gesture. That is, by means of the first prompt information, the user can be prompted to continue to operate the first gesture so as to directly enter the live-streaming room, which realizes highly efficient switching. The preset condition may include a first preset condition and a second preset condition. The first preset condition may refer to a preset magnification factor threshold, and the second preset condition may include: an operating part corresponding to the first gesture stops contacting the preview interface. Specifically, when the magnification factor corresponding to the first gesture is smaller than the preset magnification factor threshold, the first prompt information is displayed. For example, as shown in Fig. 3a, the first gesture is a two-finger opening gesture, and when the user triggers the two-finger opening gesture on the preview interface and the magnification factor corresponding to the current two-finger opening gesture is smaller than the preset magnification factor threshold, the user is prompted to "continue to zoom in and enter the live-streaming room".

In some embodiments, if the first gesture satisfies the preset condition, second prompt information is displayed, which is used to indicate that the user can directly enter the first live-streaming room. That is, by mean of the second prompt information, the user can be informed that the current gesture allows him/her to directly enter the first live-streaming room, which realizes highly efficient switching. Specifically, when the first gesture satisfies the first preset condition, the second prompt information is displayed. For example, as shown in Fig. 3b, when the magnification factor corresponding to the first gesture is greater than or equal to the preset magnification factor threshold and the user's fingers have not left the display screen, the user is prompted to "release your fingers and enter the live-streaming room".

Specifically, when the first gesture is a two-finger opening gesture, a mapping relationship between the prompt information and the magnification factor can be set in advance. For example, given that the preset magnification factor threshold is N, when the magnification factor is ∈ [1, N], the prompt information may be "continue to zoom in and enter the live-streaming room"; and when the magnification factor is ∈ [N,Y], the prompt information may be "release fingers and enter the live-streaming room in a clear-screen mode".

In some embodiments, if the first gesture does not satisfy the first preset condition and the second preset condition of the preset condition, the screen of the first live-streaming room is displayed in a second preview mode. Specifically, when the magnification factor corresponding to the first gesture is smaller than the preset magnification factor threshold and the fingers have not left the preview interface, the live-streaming screen of the first live-streaming room is displayed in the second preview mode. The second preview mode means that the preview elements displayed in the first preview mode are cancelled and not displayed on the live-streaming screen. That is, by means of the second preview mode, the users can quickly focus on the live-streaming content, and the users' experience is improved. For example, Fig. 3a or 3b shows the screen of the first live-streaming room displayed in the second preview mode.

If the first gesture does not satisfy the first preset condition but satisfies the second preset condition, the live-streaming screen of the first live-streaming room is displayed in the first preview mode. Specifically, if the magnification factor corresponding to the first gesture is smaller than the preset magnification factor threshold and the fingers have left the preview interface, the live-streaming screen of the first live-streaming room is still played in the first preview mode. For example, in the application scenario shown in Fig. 3a, if the user's fingers have left the display screen, it will return to the display mode corresponding to Fig. 2a.

In some embodiments, after entering the first live-streaming room in the clear-screen mode, the first live-streaming room is exited in response to a first operation triggered by the user on the interface of the first live-streaming room, and the preview interface is displayed. The first operation may include one or more of the following: a sliding operation in a first direction triggered on the interface of the first live-streaming room, an operation of the second gesture triggered on the interface of the first live-streaming room, or a triggering operation for a first control on the interface of the first live-streaming room. Among them, the sliding operation in the first direction can be a rightward sliding operation, and when the first gesture is a two-finger opening gesture, the second gesture can be a two-finger pinching gesture.

For example, in the live-streaming room in a clear-screen mode as shown in Fig. 2b, the first operation may be triggering a rightward sliding operation on the display screen, or triggering a two-finger pinching gesture on the display screen, or clicking on the closing control 201 on the display screen, then exiting the live-streaming room and returning to the screen shown in Fig. 2a.

In some embodiments, after entering the first live-streaming room in a clear-screen mode, the live-streaming screen of the first live-streaming room is displayed in a standard mode in response to a second operation triggered by the user on the interface of the first live-streaming room. That is, when the user triggers the second operation on the interface of the first live-streaming room, the first live-streaming room exits the clear-screen mode and enters a non-clear-screen mode, that is, the standard mode. For example, the comment information is displayed on the live-streaming screen in the standard mode. That is, by means of a second triggering operation, it is possible to efficiently switch from the clear-screen mode to the standard mode. For example, Fig. 2c shows a live-streaming screen in a standard mode.

In an embodiment, the second operation may include: a sliding operation in a second direction triggered on the interface of the first live-streaming room, and a triggering operation for a second control on the interface of the first live-streaming room. For example, in the scenario shown in Fig. 2b, the user triggers a leftward sliding operation on the display screen, or clicks on the clear-screen exiting control 202 to enter the display screen shown in Fig. 2c.

In some embodiments, after entering the first live-streaming room in a clear-screen mode, a second live-streaming room is entered in response to a third operation triggered by the user on the interface of the first live-streaming room, and the live-streaming screen of the second live-streaming room is displayed in a standard mode. The third operation includes a sliding operation in a third direction triggered on the interface of the first live-streaming room, which may include an upward sliding operation or a downward sliding operation triggered on the interface. That is, when the user triggers the sliding operation in the third direction on the screen of the first live-streaming room displayed in a clear-screen mode, another live-streaming room will be entered and the clear-screen mode will be exited to display the screen of the another live-streaming rooms in a standard mode.

It can be seen that when the user browses video streams through a preview interface of a client, the preview interface displays a live-streaming screen of a first live-streaming room in a first preview mode. When the user triggers a first gesture on the preview interface, the first gesture is acquired, and it is judged whether the first gesture satisfies a preset condition. If the first gesture satisfies the preset condition, it will directly enter the first live-streaming room in a clear-screen mode. The first gesture is a multi-touch gesture. That is, when the first gesture triggered by the user on the preview interface satisfies the preset condition, the user directly enters the live-streaming room in the clear-screen mode to watch the live-streaming video, which shortens the interaction path, improves the compatibility, and is more in line with the user's expectation. In this way, it is beneficial for the user to quickly focus on the live-streaming content and improves the user's experience.

Based on the above-described method embodiments, an embodiment of the present disclosure provides a live-streaming room accessing apparatus and an electronic device, which will be described below with reference to the accompanying drawings.

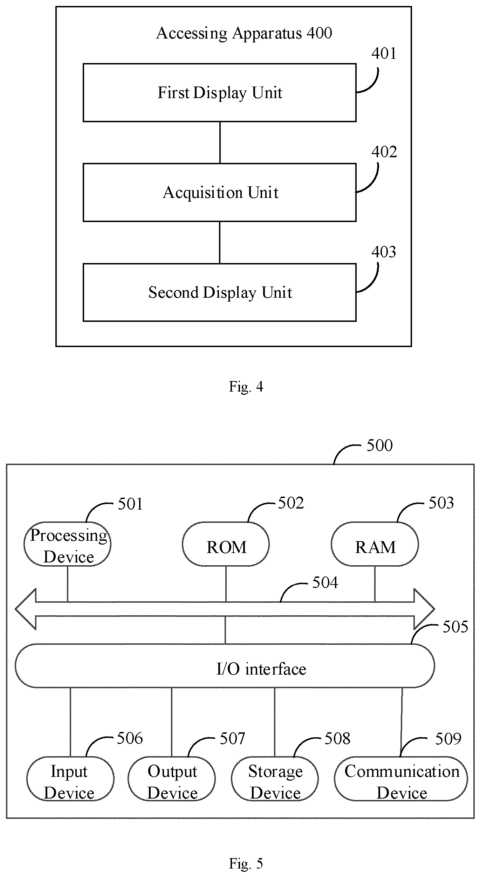

Referring to Fig. 4, which is a schematic structural diagram of a live-streaming room accessing apparatus provided by an embodiment of the present disclosure. As shown in Fig. 4, the apparatus 400 may include a first display unit 401, an acquisition unit 402 and a second display unit 403.

The first display unit 401 is configured to display a preview interface, wherein the preview interface displays a live-streaming screen of a first live-streaming room in a first preview mode.

The acquisition unit 402 is configured to acquire a first gesture in response to the first gesture triggered on the preview interface, wherein the first gesture is a multi-touch gesture.

The second display unit 403 is configured to enter the first live-streaming room in response to the first gesture satisfying a preset condition, and display the live-streaming screen of the first live-streaming room in a clear-screen mode.

In an embodiment of the present disclosure, the second display unit 403 is specifically configured to display the live-streaming screen of the first live-streaming room in a first clear-screen mode in response to entering the first live-streaming room; or display the live-streaming screen of the first live-streaming room in a second clear-screen mode in response to entering the first live-streaming room; the number of screen elements on the screen of the first live-streaming room corresponding to the first clear-screen mode is smaller than the number of screen elements on the screen of the first live-streaming room corresponding to the second clear-screen mode.

In an embodiment of the present disclosure, the live-streaming screen of the first live-streaming room displayed in the first clear-screen mode displays the streamer's identifier and cancels the display of comment information, and the live-streaming screen of the first live-streaming room displayed in the second clear-screen mode displays the streamer's identifier and the type identifier of the live-streaming room.

In an embodiment of the present disclosure, the apparatus further includes a third display unit.

The third display unit is configured to display first prompt information if the first gesture does not satisfy the preset condition, and the first prompt information is used to indicate that the first live-streaming room can be entered by continuing to operate the first gesture;

The third display unit is configured to display second prompt information if the first gesture satisfies the preset condition, and the second prompt information is used to indicate that the first live-streaming room can be directly entered.

In an embodiment of the present disclosure, the apparatus further includes a fourth display unit.

The fourth display unit is configured to display the live-streaming screen of the first live-streaming room in a second preview mode if the first gesture does not satisfy a first preset condition and a second preset condition of the preset condition, wherein the second preview mode means that the preview elements displayed in the first preview mode are not displayed on the live-streaming screen.

The fourth display unit is configured to display the live-streaming screen of the first live-streaming room in the first preview mode if the first gesture does not satisfy the first preset condition and satisfies the second preset condition.

In an embodiment of the present disclosure, the first gesture is a finger-opening gesture, and the preset condition includes: the magnification factor corresponding to the first gesture is greater than or equal to a preset magnification factor threshold, and the operating part corresponding to the first gesture stops contacting the preview interface.

In an embodiment of the present disclosure, the apparatus further includes a sending unit.

The sending unit is configured to send a vibration signal to an equipment where the live-streaming client is located in response to entering the first live-streaming room, so that the equipment can give a vibration prompt according to the vibration signal.

In an embodiment of the present disclosure, the first display unit 401 is further configured to exit the first live-streaming room and display the preview interface in response to a second gesture triggered on the interface of the first live-streaming room after entering the first live-streaming room.

In an embodiment of the present disclosure, the second gesture is a finger-pinching gesture.

In an embodiment of the present disclosure, the apparatus further includes a fifth display unit.

The fifth display unit is configured to display the live-streaming screen of the first live-streaming room in a normal mode in response to a triggering operation for the live-streaming screen of the first live-streaming room displayed in the clear-screen mode, wherein comment information is displayed on the live-streaming screen of the first live-streaming room in the normal mode.

It should be noted that the specific implementations of various units in this embodiment can refer to the relevant description in the above method embodiments. The division of units in the embodiment of the present disclosure is schematic and merely a division in terms of logical functions, and there may be other division methods in actual implementations. Various functional units in the embodiment of the present disclosure can be integrated into one processing unit, or each unit can exist alone physically, or two or more units can be integrated into one unit. For example, in the above embodiment, the processing unit and the sending unit may be the same unit or different units. The above integrated units can be realized in the form of hardware or software functional units.

Referring to Fig. 5, there is shown a schematic structural diagram of an electronic device 500 suitable for implementing the embodiment of the present disclosure. The terminal devices in the embodiment of the present disclosure may include, but are not limited to, mobile terminals such as mobile phones, notebook computers, digital broadcast receivers, PDA (Personal Digital Assistant), PAD (Tablet Computer), PMP (Portable Multimedia Player) and vehicle-mounted terminals (such as vehicle-mounted navigation terminals); and fixed terminals such as digital TV and desktop computers. The electronic device shown in Fig. 5 is only an example, and should not bring any limitation to the function and application scope of the embodiment of the present disclosure.

As shown in Fig. 5, the electronic device 500 may include a processing device (such as a central processing unit, a graphics processor, etc.) 501, which may perform various appropriate actions and processes according to a program stored in a read-only memory (ROM)502 or a program loaded from a storage device 508 into a random-access memory (RAM)503. In the RAM 503, various programs and data required for the operation of the electronic device 500 are also stored. The processing device 501, the ROM 502 and the RAM 503 are connected to each other through a bus 504. An input/output (I/O) interface 505 is also connected to the bus 504.

Generally, the following devices can be connected to the I/O interface 505: an input device 506 including, for example, a touch screen, a touch pad, a keyboard, a mouse, a camera, a microphone, an accelerometer, a gyroscope, etc.; an output device 507 including, for example, a liquid crystal display (LCD), a speaker, a vibrator, etc.; a storage device 508 such as a magnetic tape, a hard disk, etc.; and a communication device 509. The communication device 509 may allow the electronic device 500 to communicate wirelessly or in a wired manner with other devices to exchange data. Although Fig. 5 shows an electronic device 500 with various devices, it should be understood that it is not required to implement or have all the devices as shown. More or fewer devices may alternatively be implemented or provided.

In particular, according to an embodiment of the present disclosure, the process described above with reference to the flowchart can be implemented as a computer software program. For example, embodiments of the present disclosure include a computer program product including a computer program carried on a non-transitory computer-readable medium, which contains program codes for executing the method shown in the flowchart. In such an embodiment, the computer program can be downloaded and installed from the network through the communication device 509, or installed from the storage device 508 or from the ROM 502. When the computer program is executed by the processing device 501, the above functions defined in the method of the embodiment of the present disclosure are performed.

The electronic device provided by the embodiment of the present disclosure belongs to the same inventive concept as the method provided by the above embodiment, and the technical details not described particularly in this embodiment can be found in the above embodiment, and this embodiment has the same beneficial effects as the above embodiment.

An embodiment of the present disclosure provides a computer storage medium on which a computer program is stored, which, when executed by a processor, realizes the method provided in the above embodiment.

The computer-readable medium mentioned above in the present disclosure can be a computer-readable signal medium or a computer-readable storage medium or any combination of the two. The computer-readable storage medium can be, for example, but not limited to, an electrical, magnetic, optical, electromagnetic, infrared, or semiconductor system, apparatus or device, or a combination of any of the above. Examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium can be any tangible medium containing or storing a program, which can be used by or in combination with an instruction execution system, apparatus or device. In the present disclosure, a computer-readable signal medium may include a data signal propagated in baseband or as part of a carrier wave, in which computer-readable program codes are carried. This propagated data signal can take many forms, including but not limited to electromagnetic signals, optical signals or any suitable combination of the above. A computer-readable signal medium can also be any computer-readable medium other than a computer-readable storage medium, which can send, propagate or transmit a program for use by or in connection with an instruction execution system, apparatus or device. The program codes contained in the computer-readable medium can be transmitted by any suitable medium, including but not limited to: electrical wires, optical cables, RF (radio frequency) and the like, or any suitable combination of the above.

In some embodiments, the client and the server can communicate by using any currently known or future developed network protocol such as HTTP (HyperText Transfer Protocol), and can be interconnected with digital data communication in any form or medium (for example, communication network). Examples of communication networks include a local area network ("LAN"), a wide area network ("WAN"), the Internet (for example, the Internet) and end-to-end networks (for example, ad hoc end-to-end networks), as well as any currently known or future developed networks.

The computer-readable medium may be included in the electronic device; or it can exist alone without being assembled into the electronic device.

The computer-readable medium carries one or more programs, which, when executed by the electronic device, enable the electronic device to perform the above method.

Computer program codes for performing the operations of the present disclosure may be written in one or more programming languages or their combinations, including but not limited to object-oriented programming languages, such as Java, Smalltalk, C++, and conventional procedural programming languages, such as "C" language or similar programming languages. The program code can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the drawings illustrate the architecture, functions and operations of possible implementations of systems, methods and computer program products according to various embodiments of the present disclosure. In this regard, each block in the flowchart or block diagram may represent a module, a program segment, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The units involved in the embodiments described in the present disclosure can be realized by software or hardware. Among them, the name of the unit does not constitute any limitation of the unit itself in some cases.

The functions described above herein may be at least partially performed by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

It should be noted that the embodiments in this specification are described in a progressive way, and each embodiment focuses on the differences from other embodiments, so it is only necessary to refer to the same and similar parts between various embodiments. As for the system or device disclosed in the embodiments, since it corresponds to the method disclosed in the embodiments, the description is relatively simple, and the related contents can be found in the description of the method embodiments.

It should be understood that in the present disclosure, "at least one (item)" means one or more (items), and "multiple/a plurality of' means "two or more". "And/or" is used to describe the relationship between related objects, indicating that there can be three kinds of relationships. For example, "A and/or B" can indicate that there is only A, there is only B, and there are both A and B, where A and B can be in singular or plural form. The character "/" generally indicates the former and latter objects are in an OR relationship. "At least one of the following items (items)" or its similar expression refers to any combination of these items, including any combination of single item or plural items. For example, "at least one (item) of a, b or c" can indicate a; b; c; a and b; a and c; b and c; or a and b and c, where a, b and c can be in singular or plural form.

It should also be noted that in the present disclosure, relational terms such as "first" and "second" are only used to distinguish one entity or operation from another entity or operation, and do not necessarily require or imply that there is any such actual relationship or order between these entities or operations. Moreover, the terms "including", "comprising" or any other variations thereof are intended to cover non-exclusive inclusion, so that a process, method, article or equipment including a series of elements includes not only those elements, but also other elements not explicitly listed or elements inherent to such process, method, article or equipment. Without further restrictions, an element defined by the phrase "including one..." does not exclude the existence of other identical elements in the process, method, article or equipment including the element.

The steps of the method or algorithm described in connection with the embodiments disclosed herein may be directly implemented in a hardware, a software module executed by a processor, or a combination of these two. The software module can be placed in random-access memory (RAM), an internal memory, a read-only memory (ROM), an electrically programmable ROM, an electrically erasable programmable ROM, a register, a hard disk, a removable disk, a CD-ROM, or any other storage medium known in the related art.

The foregoing description of the disclosed embodiments enables those skilled in the art to implement or use the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments shown herein, but is to be in accordance with the widest scope consistent with the principles and novel features disclosed herein.

## Claims

1. A live-streaming room accessing method, comprising:
displaying a preview interface, wherein the preview interface displays a live-streaming screen of a first live-streaming room in a first preview mode;
in response to a first gesture triggered on the preview interface, acquiring the first gesture, wherein the first gesture is a multi-touch gesture; and
in response to the first gesture satisfying a preset condition, entering the first live-streaming room, and displaying the live-streaming screen of the first live-streaming room in a clear-screen mode.

2. The method according to claim 1, wherein the entering the first live-streaming room and displaying the live-streaming screen of the first live-streaming room in a clear-screen mode comprises:
in response to entering the first live-streaming room, displaying the live-streaming screen of the first live-streaming room in a first clear-screen mode; or,
in response to entering the first live-streaming room, displaying the live-streaming screen of the first live-streaming room in a second clear-screen mode, wherein
a number of screen elements on a screen of the first live-streaming room corresponding to the first clear-screen mode is smaller than a number of screen elements on a screen of the first live-streaming room corresponding to the second clear-screen mode.

3. The method according to claim 2, wherein
the live-streaming screen of the first live-streaming room displayed in the first clear-screen mode displays a streamer's identifier and cancels a display of comment information, and
the live-streaming screen of the first live-streaming room displayed in the second clear-screen mode displays a streamer's identifier and a type identifier of the live-streaming room.

4. The method according to claim 1, further comprising:
in response to the first gesture not satisfying the preset condition, displaying first prompt information, wherein the first prompt information is configured to indicate that the first live-streaming room can be entered by continuing to operate the first gesture;
in response to the first gesture satisfying the preset condition, displaying second prompt information, wherein the second prompt information is configured to indicate that the first live-streaming room can be directly entered.

5. The method according to claim 4, further comprising:
in response to the first gesture not satisfying a first preset condition and a second preset condition of the preset condition, displaying the live-streaming screen of the first live-streaming room in a second preview mode, wherein the second preview mode is a mode in which a preview element displayed in the first preview mode is not displayed on the live-streaming screen;
in response to the first gesture not satisfying the first preset condition and satisfying the second preset condition, displaying the live-streaming screen of the first live-streaming room in the first preview mode.

6. The method according to any one of claims 1-5, wherein the first gesture is a zoom-in gesture, and
the preset condition comprises: a magnification factor corresponding to the first gesture is greater than or equal to a preset magnification factor threshold, and an operating part corresponding to the first gesture stops contacting the preview interface.

7. The method according to claim 1, further comprising:
in response to entering the first live-streaming room, sending a vibration signal to an equipment where a live-streaming client is located, so that the equipment gives a vibration prompt according to the vibration signal.

8. The method according to claim 1, wherein after entering the first live-streaming room, the method further comprises:
in response to a second gesture triggered on an interface of the first live-streaming room, exiting the first live-streaming room and displaying the preview interface.

9. The method according to claim 8, wherein the second gesture is a finger-pinching gesture.

10. The method according to claim 1, further comprising:
in response to a triggering operation for the live-streaming screen of the first live-streaming room displayed in the clear-screen mode, displaying the live-streaming screen of the first live-streaming room in a standard mode, wherein comment information is displayed on the live-streaming screen of the first live-streaming room in the standard mode.

11. A live-streaming room accessing apparatus, comprising:
a first display unit, configured to display a preview interface, wherein the preview interface displays a live-streaming screen of a first live-streaming room in a first preview mode;
an acquisition unit, configured to acquire a first gesture in response to the first gesture triggered on the preview interface, wherein the first gesture is a multi-touch gesture; and
a second display unit, configured to enter the first live-streaming room in response to the first gesture satisfying a preset condition, and display the live-streaming screen of the first live-streaming room in a clear-screen mode.

12. An electronic device, comprising a processor and a memory, wherein
the memory is configured to store an instruction or a computer program; and
the processor is configured to execute the instruction or the computer program in the memory, so that the electronic device executes the method according to any one of claims 1-10.

13. A computer-readable storage medium having an instruction stored therein, wherein the instruction, when executed on a device, causes the device to perform the method according to any one of claims 1-10.

14. A computer program product, comprising a computer program/instruction, wherein
the computer program/instruction, when executed by a processor, is configured to implement the method according to any one of claims 1-10.
